# EUROPEAN PATENT APPLICATION

(11) **EP 2 128 943 A1**
(43) Date of publication of application: **02.12.2009**
(21) Application number: 08715006.6
(22) Date of filing: 20.03.2008
(51) Int. Cl.: H02B 11/133

(54) **CRANK HANDLE APPARATUS FOR DRAW-OUT CIRCUIT BREAKER**

(30) Priority: 20.03.2007 CN 200710088706
(71) Applicant: Siemens Aktiengesellschaft, 80333 München (DE)
(72) Inventor: BI, Jiansheng, Shanghai 200335 (CN); LIU, Rongzhang, Shanghai 200333 (CN)
(86) International application number: PCT/CN2008/000553
(87) International publication number: WO 2008/113261

(57) **Abstract**

A crank handle apparatus for a draw-out circuit breaker comprises a crank (2), a locating piece (12), a button (13), a locking plate (11) provided with a projecting part (112), and a retractable connecting link (3). A taken-in locking slot (21) and a draw-out locking slot (22) are provided in both ends of the crank (2). The locating piece (12) includes a drawing gear (122) which is wedged into the taken-in locking slot (21) and the drawn-out locking slot (22) respectively, and a locating slope (123) which is connected with a locating spring apparatus (121). A button slope (132) is provided in the button (13). A first resetting spring apparatus (131) is provided in the button slope (132). A slope part of the button slope (132) and a slope part of the locating slope (123) are opposite and are in contact with each other. The projecting part (112) is suppressed against or departed from the locating piece (12) when the locking plate (11) is moved.

## Description

### Technical Field

The present invention relates to a crank handle apparatus for a draw-out circuit breaker and, particularly, to a concealed retractable crank handle apparatus.

### Background Art

A draw-out circuit breaker is a common circuit breaker, in which a breaker body which can be drawn out or pushed in is disposed on a solid drawer base, and the panel of the breaker body is provided thereon with a containing box for placing the breaker's crank handle.

A crank handle apparatus for a circuit breaker is disclosed in Chinese patent no. CN02808698. As shown in Fig. 1, it comprises a crank 51, one end of which is connected to a driving shaft, and by rotating the crank 51, the driving shaft is made to rotate so as to carry a turbine to rotate, thus realizing the drawing-out or pushing-in of the breaker body (not shown in the figure). The other end of the crank 51 is connected to one end of a connecting rod 52, and the connecting rod 52 is connected at the other end thereof to a handle 53. The crank handle apparatus is further provided with a latching rod 54 to avoid the drawing-out of the crank 51 at an inappropriate time. The crank 51 is provided with a latching slot 511, and a projecting tab 541 on the latching rod 54 is locked in the latching slot 511 when the crank 51 is at a taken-in position.

When there is a need for drawing out the breaker body, the latching rod 54 is first lifted along the direction shown by the arrow A to withdraw the projecting tab 541 from the latching slot 511, and then the connecting rod 52 is pulled outwards along the direction shown by the arrow B so as to pull the crank 51 and the handle 53 out together from the panel's taken-in box. After the handle 53 has been drawn out along the direction shown by the arrow C, the operator can hold the handle to rotate the crank so as to carry the driving shaft to rotate and draw out the breaker body.

However, since the latching rod is exposed outside the panel, it is still possible for the crank to leave its locking position due to careless operation; furthermore, due to the breaker panel's limited space, the connecting rod in the crank handle apparatus is usually quite short, so that it is quite difficult for an operator to rotate the crank.

### Contents of the invention

Aiming at the above mentioned problems, the present invention provides such a crank handle apparatus for a draw-out circuit breaker which has a double-locking mechanism, thus improving the locking reliability. Since only the control end of the locking mechanism is kept out of the panel and the remaining parts are generally arranged within the panel, the maloperation of the crank handle can be avoided. Furthermore, the force arm for rotating the crank can be lengthened without increasing the panel space to ensure a reliable, convenient and labor-saving operation for drawing-out or pushing-in the breaker body.

The present invention provides a crank handle apparatus for a draw-out circuit breaker, which comprises a crank and a locating piece for locating the crank, wherein said crank is provided with a taken-in locking slot at one axial end thereof and a drawn-out locking slot at the other end thereof; said locating piece comprises a locking gear, wherein when said crank is moved axially the locking gear is locked into the taken-in locking slot or the drawn-out locking slot, so as to locate said crank, said locating piece is provided thereon with a locating slope, and said locating slope is coupled with locating spring means; said crank handle apparatus further comprises a button, which is provided thereon with a button slope, and said button slope is coupled with first resetting spring means for resetting said button, and said locating slope and said button slope are opposite to each other and in contact with said button slope under the effect of said locating spring means.

The present invention further provides a crank handle apparatus for a draw-out circuit breaker, which comprises a crank and a locating piece for locating the crank, wherein said crank is provided with a taken-in locking slot at one axial end thereof and a drawn-out locking slot at the other end thereof; said locating piece comprises a locking gear, wherein when said crank is moved axially the locking gear is locked into the taken-in locking slot or the drawn-out locking slot, so as to locate said crank; and said crank handle apparatus further comprises a locking plate, wherein said locking plate is configured to be movable along the axial direction of said crank, said locating piece is located between said locking plate and said crank, said locking plate is provided thereon with a projecting tab oriented towards said locating piece, and said projecting tab abuts against or separates from said locating piece when said locking plate is moved.

According to another aspect of the present invention, the crank handle apparatus for a drawn-out circuit breaker further comprises a connecting rod, wherein said connecting rod comprises a rod body and a rod sleeve, said rod sleeve is movable longitudinally along said rod body with said rod body sleeved therein, wherein said rod body is provided thereon with a locating plate, said rod sleeve is provided thereon with a locating hole, so that when said rod sleeve is moved longitudinally along said rod body, said locating plate is locked into said locating hole.

### Description of the drawings

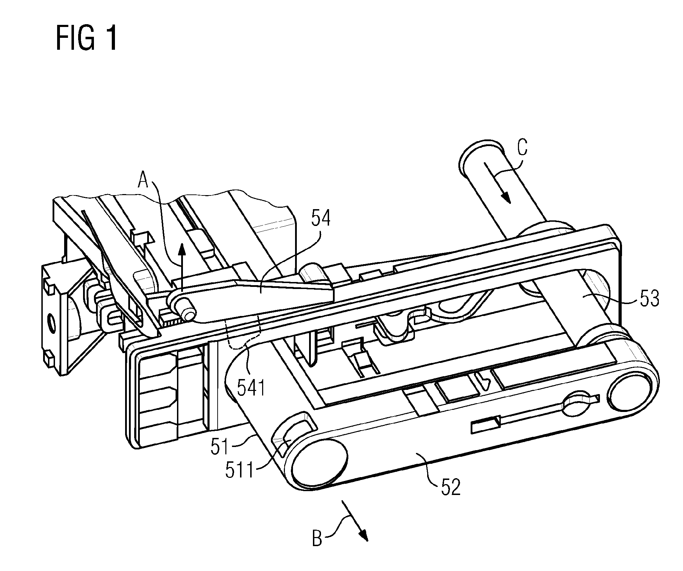

Fig. 1 is a schematic structural diagram of a currently available crank handle apparatus for a drawn-out circuit breaker;
Fig. 2 is a schematic structural diagram of an embodiment of a crank handle apparatus for a drawn-out circuit breaker according to the present invention, wherein the crank handle apparatus is at a taken-in state;
Fig. 3 is another schematic structural diagram of the embodiment of the crank handle apparatus for a drawn-out circuit breaker according to the present invention, wherein the crank handle apparatus is at a drawn-out state.

### Particular embodiments

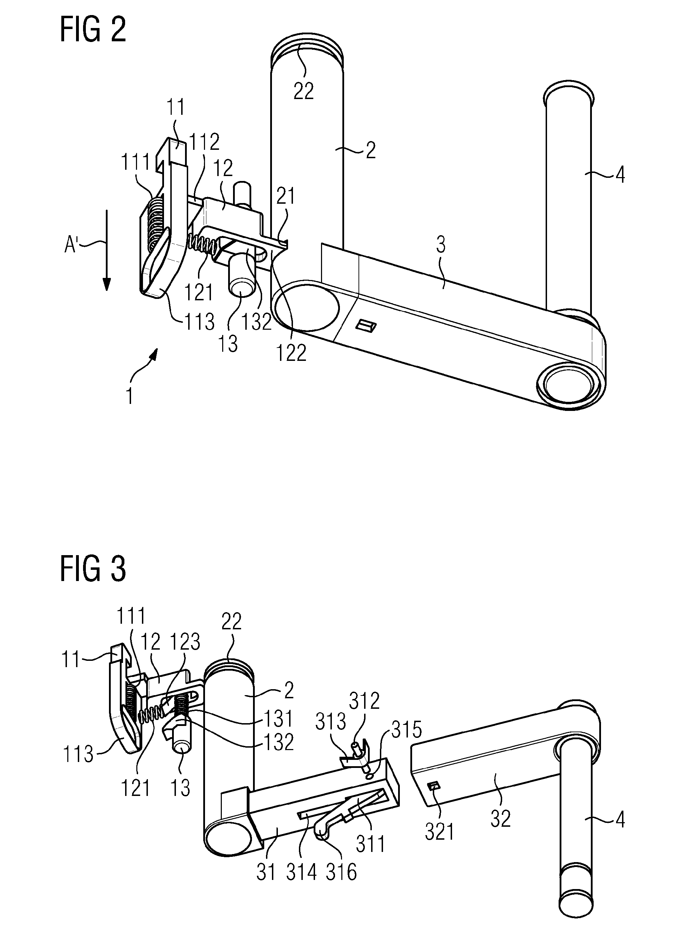

The present invention will be described in detail hereinbelow in combination with the embodiments illustrated in the accompanying drawings. As shown in Fig. 2, the crank handle apparatus for a drawn-out circuit breaker of the present invention comprises a locking mechanism 1, a crank 2, a connecting rod 3 and a handle 4.

The structure and operation principles of the locking mechanism 1 will be described first. The locking mechanism 1 realizes the function of double-locking with a locking plate 11 and a locating piece 12.

As shown in Fig. 2, one end of the crank 2 is provided with a taken-in locking slot 21, and the other end is provided with an annular drawn-out locking slot 22 along the circumferential direction. The locating piece 12 has a locking gear 122, and the locking gear 122 is locked into the taken-in locking slot 21 on the crank 2 when the crank handle apparatus is at the taken-in position and locked into the drawn-out locking slot 22 when the crank handle apparatus is at the drawn-out position. The locating piece 12 is further provided with a locating slope 123 (see Fig. 3), wherein the locating slope 123 is coupled with locating spring means 121, and the other end of the locating spring means 121 can be fixed on the breaker in a manner known to those skilled in the art.

As shown in Fig. 3, a locating piece button 13 is provided with a button slope 132 matching the locating slope 123 in shape, and the end of the button slope 132 is coupled with the first resetting spring means 131. The other end of the first resetting spring means 131 can be fixed on the breaker in a manner known to those skilled in the art. The slope part of the button slope 132 and the slope part of the locating slope 123 are configured to be opposite to and in contact with each other. When the locking gear 122 is locked into the taken-in locking slot 21 on the crank 2, by pressing the button 13 the button slope 132 is made to push the locating slope 123 along the direction perpendicular to that in which the button is pressed, so as to press the first resetting spring means 131 and the locating spring means 121 and to further carry the locating piece 12 to move towards the direction for withdrawing from the taken-in locking slot 21. When the locking gear 122 of the locating piece 12 is separated from the taken-in locking slot 21, by pulling the crank 2 along the direction A' (see Fig. 2) and at the same time releasing the button 13, the button 13 is reset under the effect of spring force of the first resetting spring means 131. As the crank 2 is moved outwards along the direction A', the locking gear 122 is automatically locked into the drawn-out locking slot 22 to lock the crank 2 under the effect of spring force of the locating spring means 121 when the locking gear 122 on the locating piece 12 is in contact with the drawn-out locking slot 22 on the crank 2.

Similarly, when the crank 2 needs to be taken in, that is, when the locking gear 122 is to be moved from the drawn-out locking slot 22 into the taken-in locking slot 21, the button 13 is pressed to make the button slope 132 push the locating slope 123 along the direction perpendicular to that in which the button is pressed, so as to press the first resetting spring means 131 and the locating spring means 121 and to further carry the locating piece 12 to move towards the direction for withdrawing from the drawn-out locking slot 22. When the locking gear 122 of the locating piece 12 is separated from the drawn-out locking slot 22, by pushing the crank 2 along the direction opposite to the direction A' and at the same time releasing the button 13, the button 13 is reset under the effect of spring force of the first resetting spring means 131. As the crank 2 is moved inwards along the direction opposite to the direction A', the locking gear 122 is automatically locked into the taken-in locking slot 21 to lock the crank 2 under the effect of spring force of the locating spring means 121 when the locking gear 122 on the locating piece 12 is in contact with the taken-in locking slot 21 on the crank 2.

Next, the secondary locking function of the locking plate 11 will be described. The locking plate 11 is configured to locate the locating piece 12 between the locking plate 11 and the crank 2, and the locking plate 11 comprises second resetting spring means 111, a projecting tab 112 and a handle portion 113. One end of the second resetting spring means 111 is coupled with the locking plate 11, and the other end is fixed on the breaker in a manner known to those skilled in the art. When the locking gear 122 of said locating piece 12 is locked into the taken-in locking slot 21 of said crank 2, the handle portion 113 of the locking plate 11 is pulled along the direction A' to abut the projecting tab 112 against the locating piece 12, and at the same time the second resetting spring means 111 is stretched. Since said locking plate 11 is fixed in the radial direction of the crank 2 and its projecting tab 112 abuts against the locating piece 12 so as to constrain the movement of the locating piece 12 in the radial direction of said crank 2, the locating piece 12 is fixedly locked in the taken-in locking slot 21 of the crank 2 and is unmovable under the effect of the projecting tab 112, so as to have the effect in locking the locating piece 12. In practical applications, the handle portion 113 of the locking plate 11 is arranged outside a breaker housing to facilitate users in pulling the locking plate 11 by the handle portion 113, while the second resetting spring means 111 and the projecting tab 112 are arranged within the breaker housing. After the locking plate 11 has been drawn out, a pin or other parts (not shown in the figure) can be used to pass through the handle portion 113 and fix the locking plate 11 on the housing.

Similarly, when the locking gear 122 of said locating piece 12 is locked into the drawn-out locking slot 22 of said crank 2, and above operations can also be used to lock the locating piece 12.

When the locking of the locating piece 12 by the locking plate 11 needs to be released, only the fixation of the handle portion 113 of the locking plate 11 on said housing needs to be released, and then said locking plate 11 is reset along the direction opposite to the direction A' due to the spring force of the second resetting spring means 111 to move the projecting tab 112 away from the locating piece 12 so as to release the locking of the locating piece 12. When the locating piece 12 is locked by the locking plate 11, the button 13 cannot be pressed down at this time because the locking plate 11 is fixed along the radial direction of the crank 2 and its projecting tab 112 abuts against the locating piece 12 to constrain the movement of the locating piece 12 along the radial direction of said crank 2, thus the maloperation on said crank 2 at a taken-in or drawn-out state is effectively avoided. After the locking of the locating piece 12 by the locking plate 11 has been released, the locating piece 12 can move a distance h along the radial direction of said crank 2 since at this time the projecting tab 112 is separated from the locating piece 12, by pressing down the button 13 at this moment the locating piece 12 is enabled to move along the direction of the locking plate 11 so as to withdraw the locking gear 122 from the taken-in locking slot 21 or the drawn-out locking slot 22 of the crank 2 and further to draw out said crank 2 from or push the crank into the breaker housing.

In the present invention, it only needs to press the button 13 once in order to realize the whole process for the crank 2 to change from taken-in to drawn-out or from drawn-out to taken-in, which simplifies the retraction operation of the crank 2. At the same time, the operation mode by a button greatly improves the operating reliability compared with the prior operation modes of pushing-pulling and ejecting-withdrawing. In the practical applications, since generally only the handle portion 113 and the button 13 need to be arranged outside the breaker housing and the remaining parts of the locking mechanism are within the breaker housing, such a conceal design further greatly reduces the possibility of maloperation.

The structure and operation principles of the connecting rod 3 will be described below. In the present invention, the connecting rod 3 is designed to be retractable so as to lengthen the force arm for rotating the crank to ensure a reliable, convenient and labor-saving operation for drawing-out or pushing-in the breaker body.

The end of the crank 2 close to the taken-in locking slot 21 is connected to a connecting rod 3, and the other end of the connecting rod 3 is provided with a handle 4. The handle 4 can be pulled out or retracted along a direction approximately parallel to the crank 2 according to needs.

As shown in Fig. 3, the connecting rod 3 comprises a rod body 31 and a rod sleeve 32, and the rod sleeve 32 can accommodate the rod body 31 and move longitudinally along the rod body 31 so as to make the connecting rod 3 retractable.

In the present embodiment, the rod body 31 comprises a locating plate 311, a pin 312 and torsional spring means 313. The rod body 31 is provided with a slot 314 and a hole 315 along the longitudinal direction of the rod body 31, and the locating plate 311 is accommodated in the slot 314. The locating plate 311 is provided with a hole (not shown in the figure) corresponding to the hole 315. The pin 312 passes through the hole 315 of the rod body 31 and the hole on the locating plate 311, fixes one end of the locating plate 311 in the rod body 31 and enables the locating plate 311 to rotate around the pin 312. The pin 312 is further provided with the torsional spring means 313. The other end of the locating plate 311 is a free end and has a projecting portion 316. The rod sleeve 32 is provided with a locating hole 321, with the locating hole 321 matching in shape with the projecting portion 316 at the free end of the locating plate 311, and the projecting portion 316 at the free end can lock and fix the rod sleeve 32 when it is passed through the locating hole 321.

In order to rotate the crank 2 with less effort, the rod sleeve 32 can be pulled out along the longitudinal direction of the rod body 31. When pulling out the rod sleeve 32, the torsional spring means 313 rotates to carry the locating plate 311 to rotate around the pin 312 and to lift off the rod body 31. As the rod sleeve 32 moves, the projecting portion 316 on the locating plate 311 will be locked into the locating hole 321 when the locating hole 321 on the rod sleeve moves just above the free end of the locating plate 311, and then the rod sleeve 32 cannot be pulled any more thus fixing the lengthened connecting rod 3. When there is a need to retract the rod sleeve 32, the projecting portion 316 of the locating plate 311 on the rod body 31 is pressed to separate the projecting portion from the locating hole 321 on the rod sleeve 32, so as to push back the rod sleeve 32 and reset the connecting rod 3 to its initial length.

Operation procedures of the crank handle apparatus for a circuit breaker of the present invention are as follows: when the circuit breaker body needs to be drawn out from or pushed into a drawer base,
resetting the locking plate 11;
pressing down the button 13 to push the locking gear 122 of the locating piece 12 out of the taken-in locking slot 21;
then drawing the crank 2 outwards and releasing the button 13 until the locking gear 122 is locked into the drawn-out locking slot 22;
drawing out the handle 4, and then drawing out the rod sleeve 32 along the longitudinal direction of the connecting rod 3 until the locating plate 311 is locked into the locating hole 321;
swinging the handle 4 to carry the crank 2 to rotate, and in turn to carry the transmission mechanism to move;
after the circuit breaker has reached the required position, pushing the handle 4 inwards, pressing down the locating plate 311 to separate it from the locating hole 321, and then retracting the rod sleeve 32 along the longitudinal direction of the connecting rod 3 until it returns to the initial position;
pressing down the button 13 again to withdraw the locking gear 122 of the locating piece 12 from the drawn-out locking slot 22;
pushing in the crank 2 and releasing the button 13 until the locking gear 122 is locked into the taken-in locking slot 21; and
finally pulling the locking plate 11 to lock the locating piece 12.

It is obvious that those skilled in the art can understand that the connecting rod retraction mode and the locking mode in the present invention are only examples, and the retraction of the connecting rod and the locking of the locking mechanism can be realized with other similar structures. In the present invention, the first spring means, the second spring means, the locating spring means and the torsional spring means are all springs, while it is obvious that other elastic means well known to those skilled in the art can also be used.

## Claims

1. A crank handle apparatus for a draw-out circuit breaker, comprising a crank (2) and a locating piece (12) for locating the crank (2), **characterized in that:**
said crank (2) is provided with a taken-in locking slot (21) at one axial end thereof and a drawn-out locking slot (22) at the other end thereof;
said locating piece (12) comprises a locking gear (122), wherein when said crank (2) is moved axially the locking gear (122) is locked into the taken-in locking slot (21) or the drawn-out locking slot (22) so as to locate said crank (2), said locating piece (12) is provided thereon with a locating slope (123), and said locating slope (123) is coupled with locating spring means (121); and
said crank handle apparatus further comprises a button (13), the button (13) is provided with a button slope (132), said button slope (132) is coupled with first resetting spring means (131) for resetting said button (13), and said locating slope (123) and said button slope (132) are opposite each other, and are in contact with said button slope (132) under the effect of said locating spring means (121).

2. The crank handle apparatus as claimed in claim 1,
**characterized in that** said first resetting spring means (131) or said locating spring means (121) are a spring.

3. The crank handle apparatus as claimed in claim 1, further comprising a connecting rod (3), with one end of said connecting rod (3) being coupled with the end of said crank (2) close to said taken-in locking slot (21).

4. The crank handle apparatus as claimed in claim 3,
**characterized in that** it further comprises a handle (4), which handle passes through the other end of said connecting rod (3) and can carry the crank (2) to rotate by way of the connecting rod (3).

5. The crank handle apparatus as claimed in claim 3 or 4, **characterized in that** said connecting rod (3) comprises a rod body (31) and a rod sleeve (32), said rod sleeve (32) is movable longitudinally along said rod body (31) with said rod body (31) sleeved therein, wherein said rod body (31) is provided with a locating plate (311), said rod sleeve (32) is provided with a locating hole (321), so that when said rod sleeve (32) is moved longitudinally along said rod body (31), said locating plate (311) is locked into said locating hole (321).

6. The crank handle apparatus as claimed in claim 5,
**characterized in that** said rod body (31) is provided thereon with a slot (314) and a hole (315), the locating plate (311) is accommodated in the slot (314), a pin (312) is inserted with one end thereof into the hole (315) and fixed onto one end of the locating plate (311), and with the other end of the pin exposed out of the hole (315) and fixedly mounting torsional spring means (313).

7. The crank handle apparatus as claimed in claim 6,
**characterized in that** the other end of said locating plate (311) has a projecting portion (316), and when said rod sleeve (32) is moved longitudinally along said rod body (31), the projecting portion (316) of said locating plate (311) is locked into said locating hole (321) under the effect of said torsional spring means (313).

8. The crank handle apparatus as claimed in claim 6 or 7, **characterized in that** said torsional spring means (313) are a spring.

9. A crank handle apparatus for a draw-out circuit breaker, comprising a crank (2) and a locating piece (12) for locating the crank (2), **characterized in that:**
said crank (2) is provided with a taken-in locking slot (21) at one axial end thereof and a drawn-out locking slot (22) at the other end thereof;
said locating piece (12) comprises a locking gear (122), wherein when said crank (2) is moved axially the locking gear (122) is locked into the taken-in locking slot (21) or the drawn-out locking slot (22), so as to locate said crank (2); and
said crank handle apparatus further comprises a locking plate (11), said locking plate (11) is configured to be movable along the axial direction of said crank (2) and
to be fixed in the radial direction of the crank (2), said locating piece (12) is located between said locking plate (11) and said crank (2), said locking plate (11) is provided thereon with a projecting tab (112) oriented towards said locating piece (12), and said projecting tab (112) abuts against or separates from said locating piece (12) when said locking plate (11) is moved.

10. The crank handle apparatus as claimed in claim 9,
**characterized in that** said locking plate (11) is coupled with second resetting spring means (111) so as to press or pull said second resetting spring means (111) when the locking plate (11) is moved.

11. The crank handle apparatus as claimed in claim 9,
**characterized in that** said locating piece (12) further comprises a locating slope (123), the locating slope (123) is coupled with locating spring means (121) and a button (13), wherein the button (13) is provided thereon with a button slope (132), the button slope (132) is provided thereon with first resetting spring means (131), and the slope part of the button slope (132) and the slope part of said locating slope (123) are opposite to and in contact with each other.

12. The crank handle apparatus as claimed in claim 10 or 11, **characterized in that** said first resetting spring means (131), said second resetting spring means (111) or said locating spring means (121) are a spring.

13. The crank handle apparatus as claimed in claim 9, further comprising a connecting rod (3), with one end of said connecting rod (3) being coupled with the end of said crank (2) close to said taken-in locking slot (21).

14. The crank handle apparatus as claimed in claim 9, further comprising a handle (4), wherein the handle passes through the other end of said connecting rod (3) and can bring the crank (2) to rotate by way of the connecting rod (3).

15. The crank handle apparatus as claimed in claim 13 or 14, **characterized in that** said connecting rod (3) comprises a rod body (31) and a rod sleeve (32), said rod sleeve (32) is movable longitudinally along said rod body (31) with said rod body (31) sleeved therein, wherein said rod body (31) is provided thereon with a locating plate (311), said rod sleeve (32) is provided thereon with a locating hole (321), and when said rod sleeve (32) is moved longitudinally along said rod body (31), said locating plate (311) is locked into said locating hole (321).

16. The crank handle apparatus as claimed in claim 15,
**characterized in that** said rod body (31) is provided with a slot (314) and a hole (315), wherein the locating plate (311) is accommodated in the slot (314), a pin (312) is inserted with one end thereof into the hole (315) and fixed onto one end of the locating plate (311), and the other end of the pin is provided with torsional spring means (313).

17. The crank handle apparatus as claimed in claim 15,
**characterized in that** the other end of said locating plate (311) has a projecting portion (316), and said projecting portion (316) of the locating plate (311) is locked into said locating hole (321) under the effect of said torsional spring means (313) when said rod sleeve (32) is moved longitudinally along said rod body (31).

18. The crank handle apparatus as claimed in claim 16 or 17, **characterized in that** said torsional spring means (313) are a spring.
